(19) Europäisches Patentamt
European Patent Office
Office européen des brevets

(11) **EP 3 557 691 A1**

(12) **EUROPEAN PATENT APPLICATION**
published in accordance with Art. 153(4) EPC

(43) Date of publication:
**23.10.2019 Bulletin 2019/43**

(51) Int Cl.:
*H01Q 1/32* (2006.01)        *H01Q 1/22* (2006.01)
*H04B 10/114* (2013.01)      *H04W 4/42* (2018.01)
*H04W 16/28* (2009.01)

(21) Application number: **18760410.3**

(22) Date of filing: **29.01.2018**

(86) International application number:
**PCT/JP2018/002736**

(87) International publication number:
**WO 2018/159183 (07.09.2018 Gazette 2018/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **28.02.2017 JP 2017036525**

(71) Applicant: **Panasonic Intellectual Property
Management Co., Ltd.
Osaka-shi, Osaka 540-6207 (JP)**

(72) Inventors:
• **SHINKAI, Sotaro
Osaka-shi
Osaka 540-6207 (JP)**

• **MAEDA, Takuji
Osaka-shi
Osaka 540-6207 (JP)**
• **ARASHIN, Nobuhiko
Osaka-shi
Osaka 540-6207 (JP)**
• **OHUE, Hiroshi
Osaka-shi
Osaka 540-6207 (JP)**

(74) Representative: **Vigand, Philippe et al
Novagraaf International SA
Chemin de l'Echo 3
1213 Onex - Genève (CH)**

(54) **INTER-VEHICLE COMMUNICATION SYSTEM**

(57) An inter-vehicle communication system is a system that provides communication between vehicles with use of a beam having a directivity and includes first antenna (102A) and second antenna (102B). First antenna (102A) is provided to first vehicle (101A), and performs wireless communication. Second antenna (102B) is provided to second vehicle (101B) coupled to first vehicle (101A), and performs wireless communication. Second antenna (102B) emits a beam toward first antenna (102A). In a state where first vehicle (101A) and second vehicle (101B) are aligned to each other, a position in a horizontal direction of first antenna (102A) is different from a position in the horizontal direction of second antenna (102B).

FIG. 4

## Description

TECHNICAL FIELD

The present disclosure relates to an inter-vehicle communication system for providing communication between vehicles.

BACKGROUND ART

In order to achieve communication between railway vehicles without use of a communication cable, a method involving use of infrared rays has been proposed. For example, according to the technique disclosed in PTL 1, a transmitter for transmitting an infrared beam is provided to one of facing coupling surfaces of vehicles, and a receiver for receiving the infrared beam is provided to the other of the facing coupling surfaces.

Citation List

Patent Literature

PTL 1: Unexamined Japanese Patent Publication No. 2007-318466

SUMMARY OF THE INVENTION

In an inter-vehicle communication system adopting wireless communication, when the vehicles travel on a curve or a branch line, relative positions and relative angles of the facing coupling surfaces change. This causes misalignment of optical axes of the transmitting side and the receiving side, which may potentially cause a communication failure.
In view of this, the present disclosure has an object to provide an inter-vehicle communication system that can reduce or suppress occurrence of a communication failure that may otherwise occur when the vehicles travel on a curve, a branch line, or the like.
An inter-vehicle communication system according to one aspect of the present disclosure is an inter-vehicle communication system that provides communication between vehicles with use of a beam having a directivity and includes a first antenna and a second antenna. The first antenna is provided to a first vehicle, and performs wireless communication. The second antenna is provided to a second vehicle coupled to the first vehicle, and performs wireless communication. The second antenna emits the beam toward the first antenna. In a state where the first vehicle and the second vehicle are aligned to each other, a position in a horizontal direction of the first antenna is different from a position in the horizontal direction of the second antenna, the horizontal direction being orthogonal to a traveling direction of the first vehicle and the second vehicle.
The present disclosure can provide an inter-vehicle communication system that can reduce or suppress occurrence of a communication failure that may otherwise occur when the vehicle travels on a curve, a branch line, or the like.

BRIEF DESCRIPTION OF DRAWINGS

FIG. 1 is a view illustrating a situation in which a communication failure occurs when vehicles travel on a curve, a branch line, or the like.
FIG. 2 is a side view of an inter-vehicle communication system according to an exemplary embodiment, showing an example of an outer appearance of the inter-vehicle communication system.
FIG. 3 is a top view of the inter-vehicle communication system according to the exemplary embodiment, showing the example of the outer appearance of the inter-vehicle communication system.
FIG. 4 is a top view illustrating an example of a coupling portion between vehicles according to the exemplary embodiment.
FIG. 5 is a top view illustrating an example of the coupling portion between the vehicles according to the exemplary embodiment.
FIG. 6 is a view illustrating an example of a beam direction according to the exemplary embodiment.
FIG. 7 is a side view illustrating an example of the coupling portion between the vehicles according to the exemplary embodiment.
FIG. 8 is a top view illustrating an example of the coupling portion according to the exemplary embodiment, observed while the vehicles are traveling straight.

FIG. 9 is a top view illustrating an example of the coupling portion according to the exemplary embodiment, observed while the vehicles are traveling on a maximum curve.

FIG. 10 is a top view illustrating an example of the coupling portion according to the exemplary embodiment, observed while the vehicles are traveling on the maximum curve.

FIG. 11 is a top view illustrating an example of the coupling portion according to the exemplary embodiment, observed while the vehicles are traveling on a maximum branch line.

FIG. 12 is a top view illustrating an example of the coupling portion according to the exemplary embodiment, observed while the vehicles are traveling on the maximum branch line.

FIG. 13 is a view illustrating a method of calculating a communicable range according to the exemplary embodiment.

FIG. 14 is a side view illustrating an example of a coupling portion between vehicles according to a variation of the exemplary embodiment.

FIG. 15 is a top view illustrating the example of the coupling portion between the vehicles according to the variation of the exemplary embodiment.

DESCRIPTION OF EMBODIMENT

(Background leading to one aspect of present disclosure)

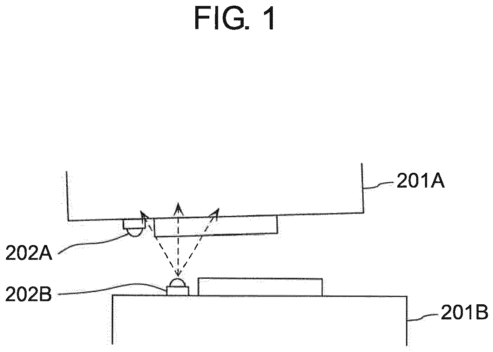

When vehicles travel on a curve or a branch line, relative positions and relative angles of facing coupling surfaces of the vehicles change. Especially while the vehicles are passing through a crossover, deviation amounts, which correspond to degrees of the changes in the relative positions and relative angles of the facing coupling surfaces, become great. This results in misalignment of optical axes of the transmitting side and the receiving side, which causes a communication failure, disadvantageously. FIG. 1 is a view for illustrating this situation. FIG. 1 is a top view of a coupling portion between two vehicles 201A and 201B. As illustrated in FIG. 1, the coupling portion between vehicles 201A and 201B includes antennas 202A and 202B facing each other.

An infrared-beam transmittable range of antenna 202B (or an infrared-beam receivable range of antenna 202A) is approximately ±30° with respect to a major axis direction at most. Here, assume that the adjacent vehicles are away from each other by the coupling portion of approximately 60 cm. In this case, while the vehicles are passing over a crossover, the two antennas become out of alignment by an angle of approximately ±40° relative to the major axis direction. Consequently, antenna 202A departs outside the communicable range, disadvantageously.

An inter-vehicle communication system according to one aspect of the present disclosure is an inter-vehicle communication system that provides communication between vehicles with use of a beam having a directivity and includes a first antenna and a second antenna. The first antenna is provided to a first vehicle, and performs wireless communication. The second antenna is provided to a second vehicle coupled to the first vehicle, and performs wireless communication. The second antenna emits the beam toward the first antenna. In a state where the first vehicle and the second vehicle are aligned to each other, a position in a horizontal direction of the first antenna is different from a position in the horizontal direction of the second antenna, the horizontal direction being orthogonal to a traveling direction of the first vehicle and the second vehicle.

With this configuration, it is possible to suppress or reduce a phenomenon that, when the vehicles travel on a curve, a branch line, or the like, one of the first and second antennas departs outside a communicable range of the other of the first and second antennas. Consequently, it is possible to suppress or reduce occurrence of a communication failure.

For example, in a state where the first vehicle and the second vehicle are aligned to each other, the first antenna may be located on a first side in the horizontal direction relative to center lines of the first and second vehicles, the center lines passing through centers in the horizontal direction of the first vehicle and the second vehicle, and the second antenna may be located on a second side opposed to the first side in the horizontal direction across the center lines.

For example, in the state where the first vehicle and the second vehicle are aligned to each other, a distance in the horizontal direction between the first antenna and the second antenna may be greater than a maximum deviation amount in the horizontal direction between the first vehicle and the second vehicle.

For example, in the state where the first vehicle and the second vehicle are aligned to each other, the first antenna may be located on a first side in the horizontal direction relative to a coupling part coupling the first vehicle and the second vehicle together, the second antenna may be located on a second side opposed to the first side in the horizontal direction across the coupling part, and a line connecting the first antenna and the second antenna may not pass through the coupling part.

For example, a position in a vertical direction of the first antenna may be identical to a position in the vertical direction of the second antenna.

For example, the position in the vertical direction of the first antenna may be different from the position in the vertical direction of the second antenna.

For example, the first antenna may be provided on a coupling surface of the first vehicle, and the second antenna may be provided on a coupling surface of the second vehicle.

An exemplary embodiment will be specifically described below with reference to the drawings.

All exemplary embodiments to be described later indicate specific examples of the present disclosure. Numerical values, shapes, materials, constituent elements, arrangement positions and connection shapes of the constituent elements, steps, orders of the steps, and the like illustrated in the exemplary embodiment described below are examples, and are not intended to limit the present disclosure. In addition, among the constituent elements in the exemplary embodiment described below, constituent elements which are not disclosed in the independent claim defining the most generic concept will be described as optional constituent elements.

(Exemplary embodiment)

According to the present exemplary embodiment, a transmitter and a receiver (or paired devices each with a transmitting/receiving function) are provided on sides opposite to each other across center lines of vehicles.

Typically, the transmitter is arranged such that the transmitter emits the strongest beam in a direction perpendicular to a coupling surface. On the other hand, according to the present exemplary embodiment, a transmitter is mounted so as to be directed to a receiver while being inclined at a predetermined angle. Similarly, the receiver is mounted on a coupling surface so as to be directed to the transmitter while being inclined at a predetermined angle relative to a direction perpendicular to the coupling surface.

Although this configuration requires a long communication distance to perform transmission and reception, this configuration involves small extents of changes in relative angles of the transmitter and the receiver. Thus, the communication connection can be maintained with a simple configuration.

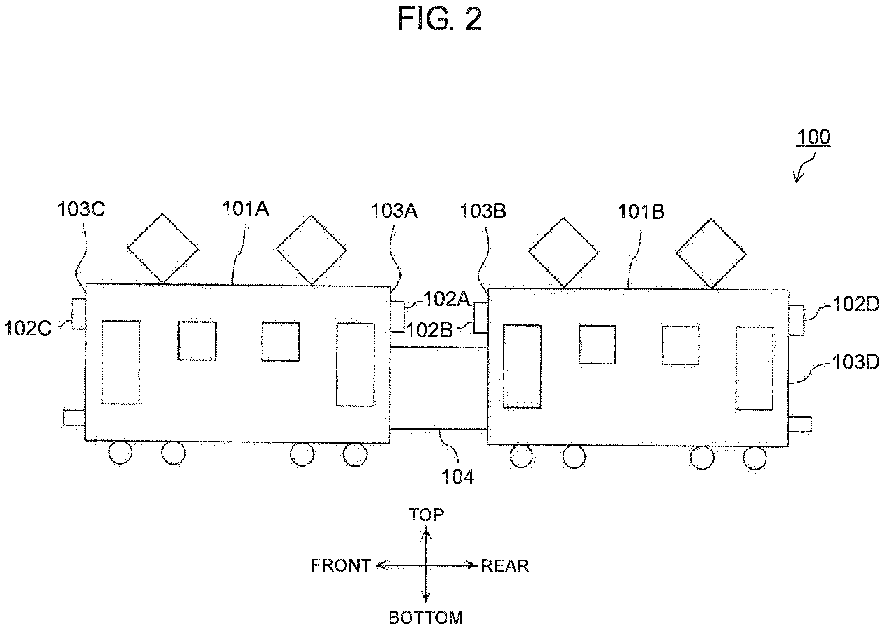

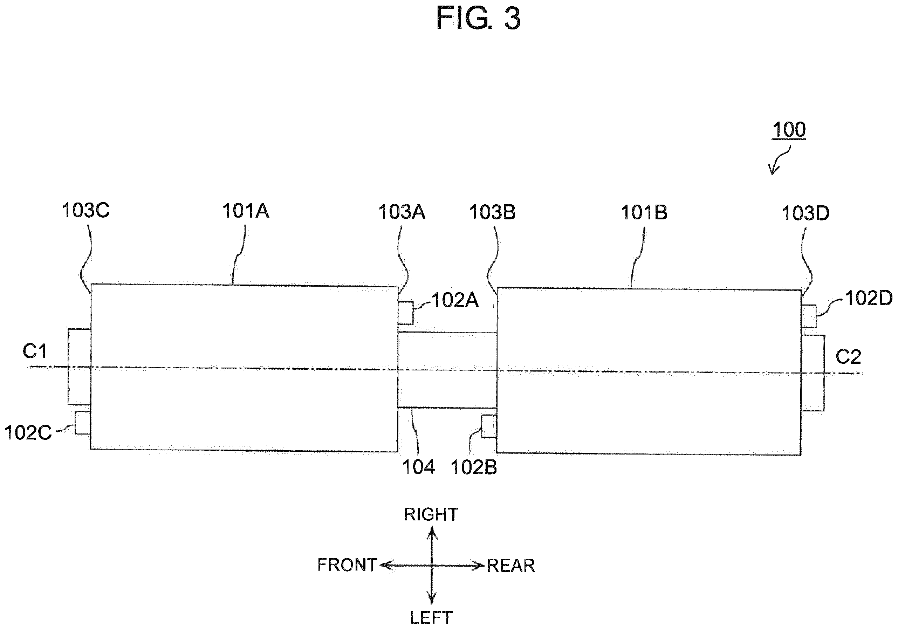

First, a configuration of inter-vehicle communication system 100 according to the present exemplary embodiment will be described. FIG. 2 is a side view of inter-vehicle communication system 100 according to the present exemplary embodiment, showing an example of an outer appearance of inter-vehicle communication system 100. FIG. 3 is a top view of inter-vehicle communication system 100 according to the present exemplary embodiment, showing the example of the outer appearance of inter-vehicle communication system 100.

Inter-vehicle communication system 100 is a low power wireless communication system that provides communication between vehicles. The low power wireless communication used in the present exemplary embodiment is wireless communication that uses radio waves in a millimeter wave band (a frequency band ranging from 30 GHz to 300 GHz) and has a high (narrow) directivity. Specifically, the low power wireless communication may conform to IEEE 802.11ad standard for operation in the 60 GHz band (WiGig (registered trademark): Wireless Gigabit), for example. The wireless communication conformed to WiGig (registered trademark) achieves highspeed communication at a theoretical throughput up to about 7 Gbps and large-volume data transfer. The wireless communication conformed to WiGig (registered trademark) has a communication distance of several meters or less.

Examples of the vehicles encompass train vehicles, Shinkansen (bullet train) vehicles, and steam train vehicles. In the following, a description will be given of configurations of two vehicles 101A and 101B among a plurality of vehicles included in inter-vehicle communication system 100. The number of vehicles included in inter-vehicle communication system 100 may be arbitrarily selected.

Inter-vehicle communication system 100 provides communication between vehicles 101A and 101B with use of a beam (radio) having the directivity. Inter-vehicle communication system 100 includes antenna 102A and antenna 102B. As illustrated in FIG. 2, vehicle 101A is provided with antennas 102A and 102C configured to perform wireless communication. Antenna 102A is provided on coupling surface 103A, which is a rear lateral surface of vehicle 101A and faces vehicle 101B. Antenna 102C is provided on coupling surface 103C, which is a front lateral surface of vehicle 101A.

Vehicle 101B is provided with antennas 102B and 102D configured to perform wireless communication. Antenna 102B is provided on coupling surface 103B, which is a front lateral surface of vehicle 101B and faces vehicle 101A. Antenna 102D is provided on coupling surface 103D, which is a rear lateral surface of vehicle 101B.

Note that antennas 102A and 102B do not necessarily need to be provided on coupling surfaces 103A and 103B, respectively. Antennas 102A and 102B may be provided in a coupling section, in which vehicles 101A and 101B are located close to each other. For example, antenna 102A may be provided on a top surface, a left lateral surface, or a right lateral surface of vehicle 101A.

Coupling sections are sections in each of which corresponding ones of vehicles 101A and 101B and other vehicles are coupled together, and are located at front and rear ends of vehicles 101A and 101B. In a case where vehicle 101A is the leading vehicle, antenna 102C may be omitted. Similarly, in a case where vehicle 101B is the trailing vehicle, antenna 102D may be omitted.

Vehicles 101A and 101B are coupled together via coupling part 104, e.g., coupler or gangway connection, in the coupling section. Namely, coupling part 104 causes vehicles 101A and 101B to be coupled together.

As the wireless communication with a communication distance of several meters or less and a high directivity, WiGig (registered trademark) may be used, for example. The use of such wireless communication can suppress or reduce establishment of communication (unintentional communication) between antenna 102C provided at the front end of vehicle 101A and antenna 102B provided at the front end of vehicle 101B.

Note that the low power wireless communication may also be achieved by, for example, Wi-Fi (registered trademark) with low electromagnetic field intensity. However, Wi-Fi (registered trademark) has a low (wide) directivity, and therefore can hardly prevent the unintentional connection. In addition, Wi-Fi (registered trademark) tends to receive interference from a lot of radio wave interference sources, which may deteriorate the throughput. Hence, WiGig (registered trademark) is more suitable for communication between vehicles in inter-vehicle communication system 100.

Next, the following will specifically describe arrangement of antennas 102A and 102B. In the following, a description will be given of operation in which a signal transmitted from antenna 102B is received by antenna 102A. This operation is similar to operation in which a signal transmitted from antenna 102A is received by antenna 102B. Namely, antenna 102A may be used for one of the transmitter and the receiver, and antenna 102B may be used for the other of the transmitter and the receiver. Alternatively, each of antennas 102A and 102B may be used for both of the transmitter and the receiver.

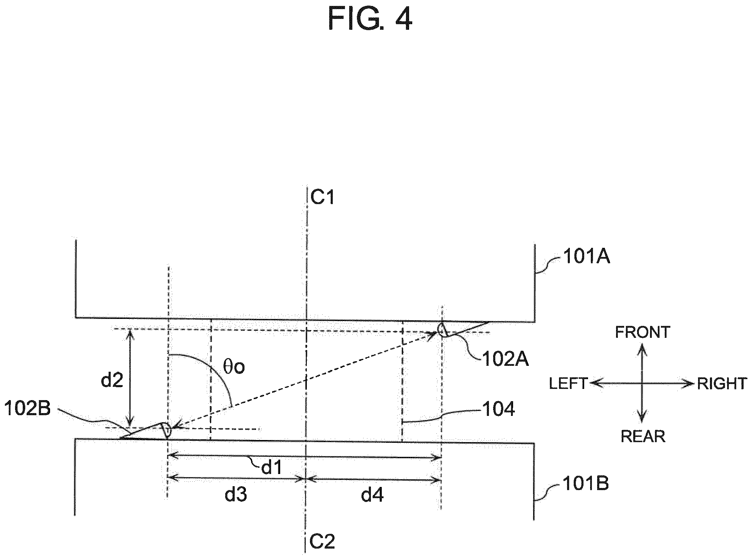

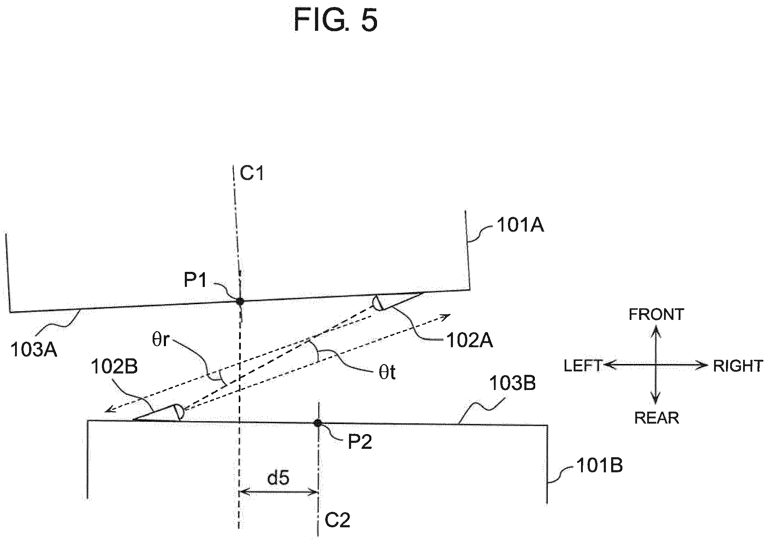

FIGS. 4 and 5 are enlarged top views of a coupling portion between vehicles 101A and 101B. FIG. 4 illustrates a state where vehicles 101A and 101B are traveling straight and center line C1 of vehicle 101A and center line C2 of vehicle 101B are aligned to each other. FIG. 5 illustrates a state where vehicles 101A and 101B are traveling on a curve or a branch line and center line C1 of vehicle 101A and center line C2 of vehicle 101B are out of alignment, center lines C1 and C2 passing through centers in a left-right direction of vehicles 101A and 101B. Note that the state where center lines C1 and C2 are aligned to each other may also be expressed as a state where vehicles 101A and 101B are aligned to each other.

As illustrated in FIG. 4, in the state where center lines C1 and C2 are aligned to each other, positions in the left-right direction of antennas 102A and 102B are out of alignment, and beam directions of antennas 102A and 102B are inclined relative to a front-rear direction of vehicles 101A and 101B such that the beam directions face each other. Namely, in the state where vehicles 101A and 101B are aligned to each other, a position in a horizontal direction of antenna 102A is different from a position in the horizontal direction of antenna 102B. Here, the horizontal direction refers to the left-right direction shown in FIG. 4, i.e., a direction orthogonal to a traveling direction (front-rear direction) of vehicles 101A and 101B.

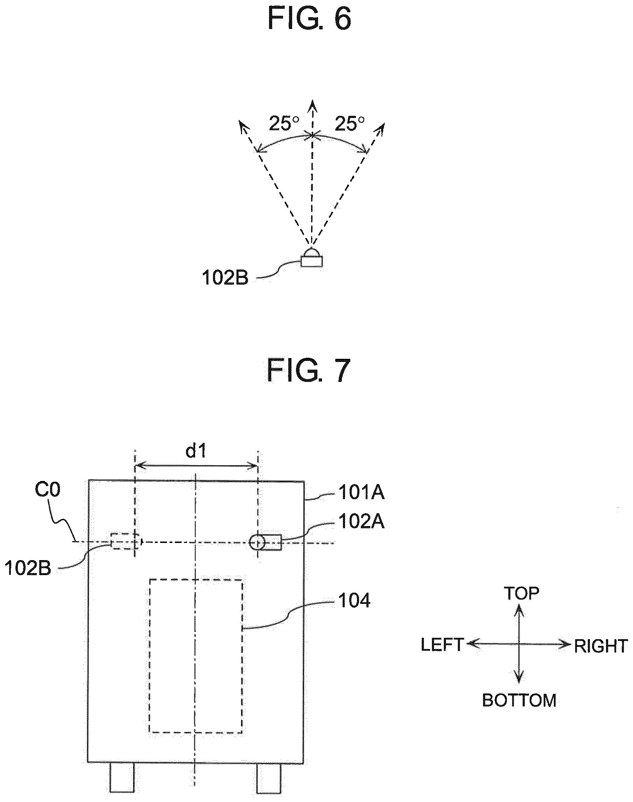

In the following, a description will be given of an exemplary case where an antenna beam angle is ±25°, as illustrated in FIG. 6. In addition, in the following description, a range of the antenna beam angle is called a communicable range, and a direction of a major beam corresponding to a center of the antenna beam angle and having the maximum electromagnetic field intensity is called a beam direction.

For example, as illustrated in FIG. 4, in the state where center lines C1 and C2 are aligned to each other, the beam directions of antennas 102A and 102B face each other. Namely, antenna 102B emits a beam toward antenna 102A. Note that the beam directions of antennas 102A and 102B do not necessarily need to coincide with each other completely. Alternatively, the beam directions of antennas 102A and 102B may be out of alignment to some extent. For example, the beam direction of antenna 102A may be deviated from the beam direction of antenna 102B by several percent to several tens percent of the antenna beam angle, or vice versa.

In addition, in the state where center lines C1 and C2 are aligned to each other, a position in the left-right direction of antenna 102A is on a first side relative to center lines C1 and C2 and a position in the left-right direction of antenna 102B is on a second side opposed to the first side across center lines C1 and C2. Namely, antenna 102A is located on a first side in the horizontal direction relative to center lines C1 and C2. Meanwhile, antenna 102B is located on a second side opposed to the first side in the horizontal direction across center lines C1 and C2.

In addition, in the state where center lines C1 and C2 are aligned to each other, distance d1 in the left-right direction between antennas 102A and 102B is greater than a maximum deviation amount in the left-right direction between vehicles 101A and 101B. The maximum deviation amount herein refers to the maximum displacement amount in design in the left-right direction between vehicles 101A and 101B. Specifically, the maximum deviation amount refers to a maximum value of distance d5 in the left-right direction between intersection P1 of center line C1 and coupling surface 103A and intersection P2 of center line C2 and coupling surface 103B measured when vehicles 101A and 101B are out of alignment as illustrated in FIG. 5. Note that the maximum deviation amount may not be defined based on the displacement amount in the left-right direction between the center lines. Alternatively, the maximum deviation amount may be defined based on a displacement amount in the left-right direction between positions in the left-right direction of the antennas or a displacement amount in the left-right direction between positions in the left-right direction of edges of the coupling surfaces.

In addition, in the state where center lines C1 and C2 are aligned to each other as illustrated in FIG. 4, distance d3 in the left-right direction from center lines C1 and C2 to antenna 102B may be equal to distance d4 in the left-right direction from center lines C1 and C2 to antenna 102A. Namely, antennas 102A and 102B may be arranged symmetrically in the left-right direction with respect to center lines C1 and C2.

In addition, for example, angle θo made by the front-rear direction of vehicles 101A and 101B and the beam direction is equal to or greater than 45°.

Note that the arrangement in FIGS. 4 and 5 are illustrated by way of examples. The positions and angles of antennas 102A and 102B do not necessarily need to satisfy the above-described conditions. For example, antennas 102A and 102B do not need to be arranged symmetrically in the left-right direction. Antennas 102A and 102B only need to be displaced from each other in the left-right direction, and both of antennas 102A and 102B may be arranged on the same side relative to center lines C1 and C2.

FIG. 7 is a side view of the coupling portion between vehicles 101A and 101B, viewed from the rear side. Shown in FIG. 7 is the state where center lines C1 and C2 are aligned to each other. For example, as illustrated in FIG. 7, antenna 102A is located on a first side in the horizontal direction relative to coupling part 104, and antenna 102B is located on a second side opposed to the first side in the horizontal direction across coupling part 104. In addition, antennas 102A and 102B are arranged in such a manner as not to allow line C0 connecting antennas 102A and 102B to pass through coupling part 104. For example, as illustrated in FIG. 7, positions in the top-bottom direction of antennas 102A and 102B are above coupling part 104.

In addition, for example, the positions in the top-bottom direction of antennas 102A and 102B are equal to each other.

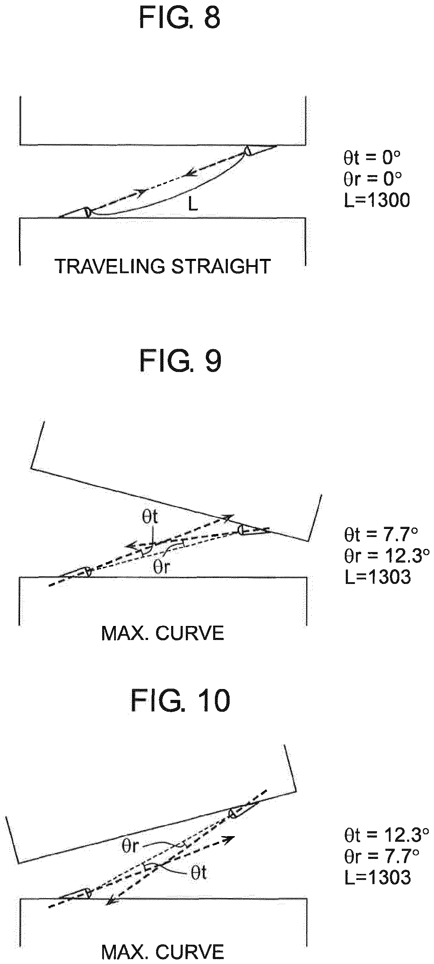

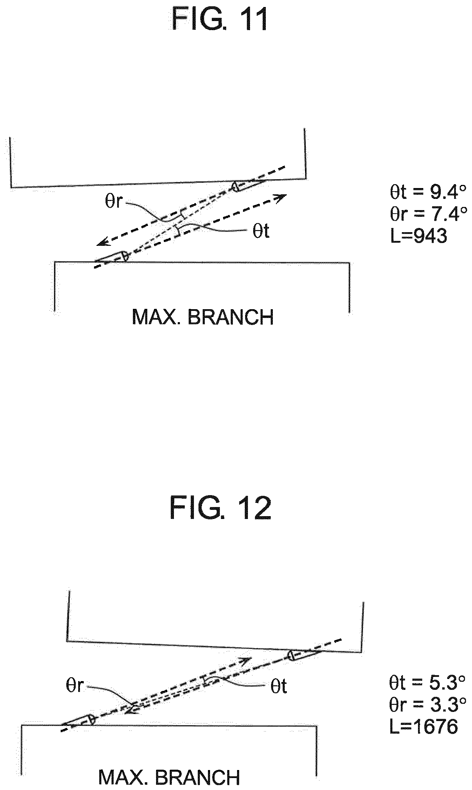

With reference to FIGS. 4 and 8 to 12, the following will describe how the system according to the present exemplary embodiment operates. A description below will deal with an exemplary case where distance d1 in the left-right direction between antennas 102A and 102B is 1200, distance d2 in the front-rear direction between antennas 102A and 102B is 500, and angle θo is 67°. FIG. 8 illustrates a state where the vehicles are traveling straight. FIGS. 9 and 10 illustrate a state where the vehicles are traveling on a maximum curve. FIGS. 11 and 12 illustrate a state where the vehicles are traveling on a maximum branch line. Assumed as the maximum curve is a curve having a radius of 250 feet. Assumed as the maximum branch is No. 8 turnout (having a turnout angle of approximately 7°).

As illustrated in FIGS. 8 to 12, in any of the states, each of angles θr and θt is equal to or less than the antenna beam angle (±25°), which means that these antennas are communicable with each other. Here, angle θr refers to an angle made by the beam direction of antenna 102A and a communication direction, and angle θt refers to an angle made by the beam direction of antenna 102B and the communication direction.

By employing the configuration of the present exemplary embodiment, it is possible to suppress or reduce a phenomenon that, when the vehicles travel on a curve, a branch line, or the like, one of antennas 102A and 102B departs outside a communicable range of the other of antennas 102A and 102B. Consequently, it is possible to suppress or reduce occurrence of a communication failure.

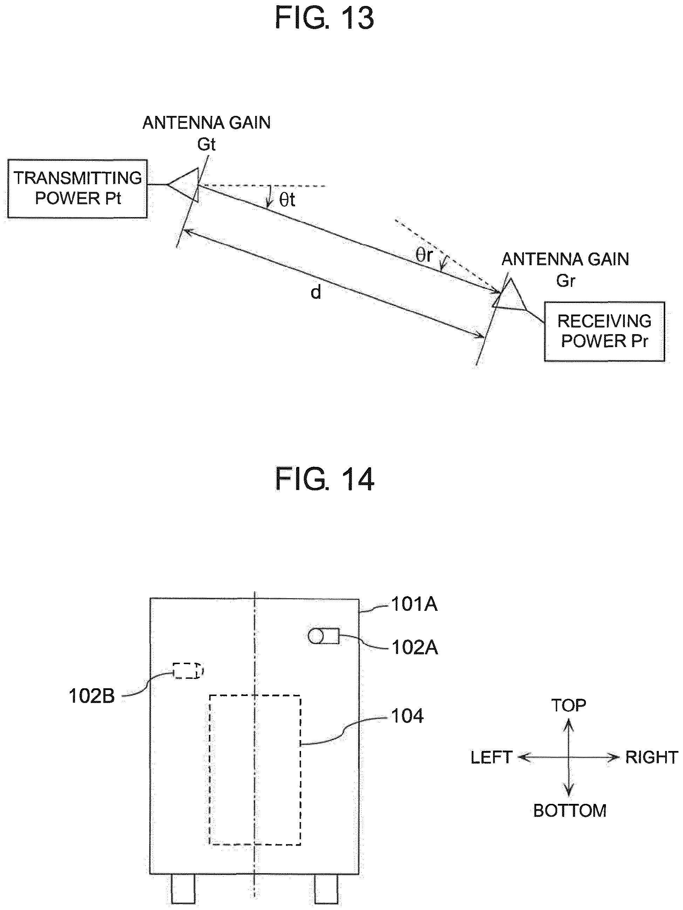

In the description above, determination of whether or not the antennas are communicable with each other is made based on whether or not angles θt and θr are within the range of the antenna beam angle. Technically, in order to establish the communication, it is necessary to satisfy the relation described below. FIG. 13 is a view illustrating a method of calculating a communicable range. Assume that Pr denotes receiving power (receiving sensitivity) and Pt denotes transmitting power. Assume also that θt denotes an angle made by a line connecting a transmitting antenna and a receiving antenna and a beam direction of the transmitting antenna, and θr denotes an angle made by the line connecting the transmitting antenna and the receiving antenna and a beam direction of the receiving antenna. Furthermore, assume that Gt(θt) denotes a gain of the transmitting antenna with respect to a signal coming in a direction deviated from the front by angle θt, and Gr(θr) denotes a gain of the receiving antenna with respect to a signal coming in a direction deviated from the front by angle θt. Moreover, assume that d denotes a distance between the transmitting antenna and the receiving antenna.

Here, a propagation loss is represented by $(4\pi d/\lambda)^2$. In a case where the beam has a frequency of 60 GHz, the beam has wavelength λ of 0.005 m. Thus, a transmission loss represented in decibel is 68 + 20 log(d) [dB]. Therefore, the communication is enabled in a case where the following relation is established.

$$Pr < Pt + Gt(\theta t) \cdot (68 + 20\log(d)) + Gr(\theta r)$$

The inter-vehicle communication system according to the present exemplary embodiment has been described above. However, the present disclosure is not limited to the exemplary embodiment.

For example, FIG. 7 illustrates the example in which the positions in the top-bottom direction of antennas 102A and 102B are identical to each other. Alternatively, as illustrated in FIG. 14, positions in the top-bottom direction of antennas 102A and 102B may be different from each other. Namely, a position in a vertical direction of antenna 102A may be identical to or different from a position in the vertical direction of antenna 102B.

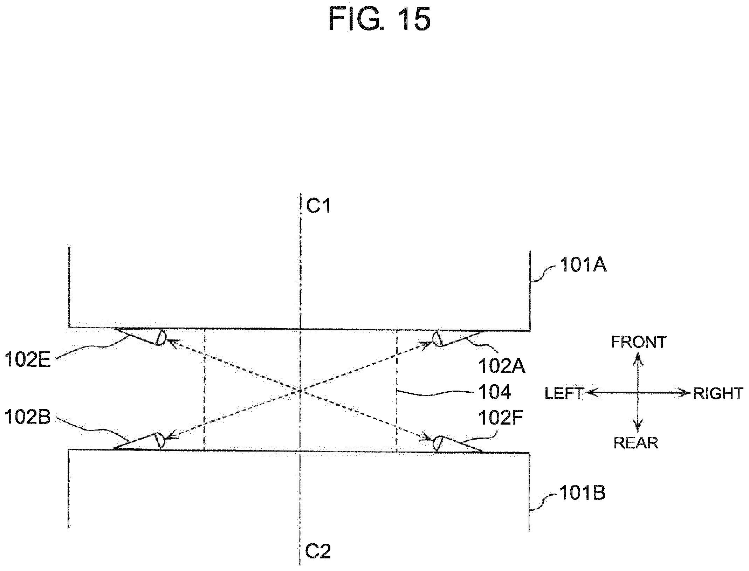

The example described above employs a single pair of antennas 102A and 102B. Alternatively, two or more pairs of antennas may be disposed in a single coupling section. For example, as illustrated in FIG. 15, a pair of antennas 102A and 102B and a pair of antennas 102E and 102F may be employed. In this case, antennas 102A, 102B, 102E, and 102F may be arranged such that a communicable range of antennas 102A and 102B does not overlap a communicable range of antennas 102E and 102F. For example, the position in the top-bottom direction of the pair of antennas 102A and 102B may be different from the position in the top-bottom direction of the pair of antennas 102E and 102F.

In a case where the communicable range of the pair of antennas 102A and 102B overlaps the communicable range of the pair of antennas 102E and 102F, communication of the pair of antennas 102E and 102F may be conducted through a communication channel that is different from a communication channel used by the pair of antennas 102A and 102B. In addition, these pairs of antennas may transmit the same data or different data.

The inter-vehicle communication system according to one or more aspects has been described above based on the exemplary embodiment. However, the present disclosure is not limited to the exemplary embodiment. Without departing from the gist of the present disclosure, various modifications conceivable by those skilled in the art may be applied to the present exemplary embodiment, and constituent elements of different exemplary embodiments may be combined with each other. The configurations achieved by such modifications and combinations also fall within the scopes of one or more aspects of the present disclosure.

INDUSTRIAL APPLICABILITY

The present disclosure is applicable to an inter-vehicle communication system for providing communication between vehicles. Specifically, the present disclosure is applicable to trains, Shinkansen (bullet trains), steam trains, and the like.

REFERENCE MARKS IN THE DRAWINGS

| | |
|---|---|
| 101A, 101B, 201A, 201B | vehicle |
| 102A, 102B, 102C, 102D, 102E, 102F, 202A, 202B | antenna |
| 103A, 103B, 103C, 103D | coupling surface |
| 104 | coupling part |

Claims

1. An inter-vehicle communication system for providing communication between vehicles with use of a beam having a directivity, the inter-vehicle communication system comprising:

a first antenna provided to a first vehicle, the first antenna performing wireless communication; and
a second antenna provided to a second vehicle coupled to the first vehicle, the second antenna performing wireless communication,
wherein
the second antenna emits the beam toward the first antenna, and
in a state where the first vehicle and the second vehicle are aligned to each other, a position in a horizontal direction of the first antenna is different from a position in the horizontal direction of the second antenna, the horizontal direction being orthogonal to a traveling direction of the first vehicle and the second vehicle.

2. The inter-vehicle communication system according to claim 1, wherein in the state where the first vehicle and the second vehicle are aligned to each other,
the first antenna is located on a first side relative to center lines of the first vehicle and the second vehicle, the center lines passing through centers in the horizontal direction of the first vehicle and the second vehicle, and
the second antenna is located on a second side opposed to the first side in the horizontal direction across the center lines.

3. The inter-vehicle communication system according to claim 1 or 2, wherein in the state where the first vehicle and the second vehicle are aligned to each other, a distance in the horizontal direction between the first antenna and the second antenna is greater than a maximum deviation amount in the horizontal direction between the first vehicle and the second vehicle.

4. The inter-vehicle communication system according to any one of claims 1 to 3, wherein in the state where the first vehicle and the second vehicle are aligned to each other,
the first antenna is located on a first side in the horizontal direction relative to a coupling part coupling the first vehicle and the second vehicle together,
the second antenna is located on a second side opposed to the first side in the horizontal direction across the coupling part, and
a line connecting the first antenna and the second antenna does not pass through the coupling part.

5. The inter-vehicle communication system according to any one of claims 1 to 4, wherein a position in a vertical direction of the first antenna is identical to a position in the vertical direction of the second antenna.

6. The inter-vehicle communication system according to any one of claims 1 to 4, wherein a position in a vertical direction of the first antenna is different from a position in the vertical direction of the second antenna.

7. The inter-vehicle communication system according to any one of claims 1 to 6, wherein
the first antenna is provided on a coupling surface of the first vehicle, and
the second antenna is provided on a coupling surface of the second vehicle.

FIG. 1

201A

202A

202B

201B

# FIG. 2

EP 3 557 691 A1

TOP

FRONT ←——→ REAR

BOTTOM

# FIG. 3

EP 3 557 691 A1

EP 3 557 691 A1

# FIG. 4

FIG. 5

# FIG. 6

102B

# FIG. 7

d1

C0

102B

101A

102A

104

TOP

LEFT ←——→ RIGHT

BOTTOM

## FIG. 8

$\theta t = 0°$
$\theta r = 0°$
L=1300

TRAVELING STRAIGHT

## FIG. 9

$\theta t = 7.7°$
$\theta r = 12.3°$
L=1303

MAX. CURVE

## FIG. 10

$\theta t = 12.3°$
$\theta r = 7.7°$
L=1303

MAX. CURVE

## FIG. 11

$\theta t = 9.4°$
$\theta r = 7.4°$
$L=943$

MAX. BRANCH

## FIG. 12

$\theta t = 5.3°$
$\theta r = 3.3°$
$L=1676$

MAX. BRANCH

# FIG. 13

ANTENNA GAIN
Gt

TRANSMITTING
POWER Pt

θt

θr

ANTENNA GAIN
Gr

d

RECEIVING
POWER Pr

# FIG. 14

101A

102A

102B

104

TOP

LEFT ← → RIGHT

BOTTOM

# FIG. 15

EP 3 557 691 A1

<table>
<tr><td colspan="2" align="center">**INTERNATIONAL SEARCH REPORT**</td><td>International application No.</td></tr>
<tr><td colspan="2"></td><td>PCT/JP2018/002736</td></tr>
</table>

**A. CLASSIFICATION OF SUBJECT MATTER**
Int.Cl.     H01Q1/32(2006.01)i,   H01Q1/22(2006.01)i,   H04B10/114(2013.01)i,
            H04W4/42(2018.01)i,   H04W16/28(2009.01)i

According to International Patent Classification (IPC) or to both national classification and IPC

**B. FIELDS SEARCHED**

Minimum documentation searched (classification system followed by classification symbols)
Int.Cl. H01Q1/32, H01Q1/22, H04B10/114, H04W4/42, H04W16/28

| Documentation searched other than minimum documentation to the extent that such documents are included in the fields searched | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2010-115944 A (EAST JAPAN RAILWAY COMPANY) 27 May 2010, paragraphs [0036]-[0048], fig. 8 (Family: none) | 1-3<br>4-7 |
| Y | JP 2015-130578 A (MITSUBISHI ELECTRIC CORP.) 16 July 2015, paragraphs [0002]-[0003], fig. 2 (Family: none) | 4-7 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 April 2018 (03.04.2018) | 10 April 2018 (10.04.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007318466 A